# EUROPEAN PATENT SPECIFICATION

(11) **EP 3 771 735 B1**
(45) Date of publication and mention of the grant of the patent: **28.08.2024**
(21) Application number: 19189195.1
(22) Date of filing: 30.07.2019
(51) Int. Cl.: C09D 167/00, C09D 167/08

(54) **DRYING PROMOTER**
TROCKNUNGSBESCHLEUNIGER
PROMOTEUR DE SÉCHAGE

(43) Date of publication of application: 03.02.2021
(73) Proprietor: Oleon N.V., 9940 Ertvelde (BE)
(72) Inventor: STRUELENS, Pieter, 1755 Gooik (BE); MAGNABOSCO, Enrico, 47533 Kleve (DE)
(74) Representative: Santarelli

(56) References cited:
- US-A- 2 744 832
- US-A- 4 131 579
- US-A- 5 985 018
- DATABASE CAPLUS [online] CHEMICAL ABSTRACTS SERVICE, COLUMBUS, OHIO, US; KAUFMANN H.P. ET AL: "Conjugated-unsaturated compounds in fat chemistry II - The development of conjugated-unsaturated systems by dehydration of hydroxy compounds and its significance to the varnish industry.", XP002796931, Database accession no. 1944:36387

## Description

The present invention relates to the field of coating compositions and more specifically to coating compositions comprising an alkyd resin. In particular, the present invention concerns specific compounds that can be used to reduce the drying time of coating compositions, such as paints and varnishes.

Coating compositions based on alkyd resins are well-known for their ease of applicability on a wide variety of substrates, their good adhesion properties and their esthetical properties. Consequently, alkyd resin based compositions represent an important part of the coating industry. Alkyd resins are used as binder in various coating compositions, in particular paints, varnishes, lacquers, etc.

Alkyd resins are polyesters derived from polycondensation reactions between a polyol and a polycarboxylic acid or a cyclic carboxylic anhydride, modified with a fatty acid or a triglyceride.

The drying speed of these alkyd resins depends on the amount and unsaturation of fatty acid(s) or triglyceride(s) used. However, the drying time remains longer than 24 hours, which may be undesirable. To reduce the drying time, by speeding up the film formation by oxidation, driers (or siccatives) may be used, which are generally metal based, such as metal soaps or metal salts.

The use of cobalt became widespread following the removal of lead in paints. However, there are some concerns about human and environmental toxicity of cobalt-based driers.

Accordingly, in order to limit the negative impact of those metal-containing driers, there is a strong incentive to reduce their uses in coating compositions.

The inventors surprisingly found that a specific fatty acid and a specific fatty acid ester could reduce the drying time of a coating composition comprising an alkyd resin, thus making possible the reduction of the quantity of metal-based drier in coating compositions.

The present invention thus relates to the use of keto C18 fatty acid(s) and/or keto C18 fatty acid ester(s), wherein the oxygen of the keto is positioned at the ninth or tenth carbon atom of a keto acyl group of each keto C18 fatty acid or keto C18 fatty acid ester, as a drying promoter.

A C18 fatty acid is a fatty acid, whose acyl group comprises 18 carbon atoms.

The acyl group may be saturated or unsaturated and is preferably linear.

When unsaturated, the acyl group comprises preferably a carbon-carbon double bond between C12 and C18, more preferably between C12 and C16, even more preferably between C12 and C13.

A keto C18 fatty acid is a C18 fatty acid that comprises a carbonyl group on the acyl group (hereinafter named "keto C18 acyl group"), i.e., other than the one comprised in the oxycarbonyl group (-O-CO-) of the fatty acid.

A keto C18 fatty acid ester is an ester that can be formed by an alcohol and a keto C18 fatty acid.

In the present application, in the keto C18 fatty acid(s) and in the keto C18 fatty acid ester(s), the oxygen of the carbonyl group (or keto) is positioned at the ninth or the tenth carbon atom (C9 or C10) of each keto C18 acyl group.

In the present application, all positions of carbon atoms are given according to IUPAC nomenclature, e.g. carbon of the oxycarbonyl group of the acyl group is C1.

The alcohol that can be used to form the keto C18 fatty acid ester, may be a monohydroxyl or a polyhydroxyl compound. Preferably, the alcohol consists of a saturated, linear or branched, hydrocarbon chain, comprising one or more hydroxyl(s).

Preferably, the alcohol comprises from 1 to 18 carbon atoms, more preferably from 1 to 9 carbon atoms, even more preferably from 1 to 3 carbon atoms.

In the present application, unless otherwise indicated, ranges are intended to include the limits.

Preferably, the alcohol is glycerol or methanol.

Advantageously, the alcohol is glycerol. The keto C18 fatty acid ester is then a keto triglyceride.

Indeed, a triglyceride or triacylglycerol, is a triester that can be formed by the esterification of a glycerol by three fatty acids. Since each fatty acid can be a keto C18 fatty acid, wherein the oxygen of the keto is positioned at the ninth or tenth carbon atom of the keto acyl group, such a triglyceride may thus comprise one, two or three keto C18 acyl group(s), and is named in the present application "keto triglyceride".

In the keto C18 fatty acid(s), the C18 fatty acid can be saturated and linear and then the keto fatty acid is a 9-oxo-octadecanoic acid (CAS 4114-74-3, and named 9-keto stearic acid in the present application) or 10-oxo-octadecanoic acid (CAS 4158-12-7, and named 10-keto stearic acid in the present application), or, advantageously, a mixture thereof.

Alternatively, in the keto C18 fatty acids, C18 fatty acids can be a mixture of fatty acids (such as saturated and unsaturated) and the keto C18 fatty acids are those wherein:
- the oxygen of the keto is positioned at the ninth carbon atom of the keto acyl group of each keto C18 fatty acid, or
- the oxygen of the keto is positioned at the tenth carbon atom of the keto acyl group of each keto C18 fatty acid, or
- a mixture thereof.

Advantageously, the keto C18 fatty acids is a mixture of saturated keto C18 fatty acid(s) and unsaturated keto C18 fatty acid(s), wherein the oxygen of the keto is positioned at the ninth or tenth carbon atom of the keto acyl group of each keto C18 fatty acid.

In particular, the keto C18 fatty acids is a mixture of 9-keto stearic acid, 10-keto stearic acid, and unsaturated keto C18 fatty acid(s), wherein the oxygen of the keto is positioned at the ninth or tenth carbon atom of the keto acyl group of each keto C18 fatty acid, the unsaturation (carbon-carbon double bond) being comprised between C12 and C18 of each unsaturated keto C18 fatty acid, more preferably between C12 and C16, even more preferably between C12 and C13.

In the keto C18 fatty acid ester(s), the C18 acyl group can be saturated and linear and then the keto fatty acid ester is a 9-oxo-octadecanoate or 10-oxo-octadecanoate, or, advantageously, a mixture thereof.

Alternatively, in the keto C18 fatty acid esters, the C18 acyl groups of the keto fatty acid esters can be a mixture of C18 acyl groups (such as saturated and unsaturated) and the keto C18 fatty acid esters are those wherein:
- the oxygen of the keto is positioned at the ninth carbon atom of a keto acyl group of each keto C18 fatty acid ester, or
- the oxygen of the keto is positioned at the tenth carbon atom of a keto acyl group of each keto C18 fatty acid ester, or
- a mixture thereof.

Advantageously, the keto C18 fatty acid esters is a mixture of saturated keto C18 fatty acid ester(s) and unsaturated keto C18 fatty acid ester(s), wherein the oxygen of the keto is positioned at the ninth or tenth carbon atom of a keto acyl group of each keto C18 fatty acid ester.

In particular, the keto C18 fatty acid esters is a mixture of 9-oxo-octadecanoate, 10-oxo-octadecanoate, and unsaturated keto C18 fatty acid ester(s), wherein the oxygen of the keto is positioned at the ninth or tenth carbon atom of a keto acyl group of each keto C18 fatty acid ester, the unsaturation (carbon-carbon double bond) being comprised between C12 and C18 of each unsaturated keto C18 fatty acid ester, more preferably between C12 and C16, even more preferably between C12 and C13.

In the case of a keto C18 fatty acid ester that can be formed with an alcohol that is a polyhydroxyl compound, one, two or more, identical or different, keto C18 acyl group(s), wherein the oxygen of the keto is positioned at the ninth or tenth carbon atom of the keto acyl group(s), may be comprised in the keto C18 fatty acid ester.

In particular, in the case of the keto triglyceride(s), one, two or three, identical or different, keto C18 acyl group(s), wherein the oxygen of the keto is positioned at the ninth or tenth carbon atom of the keto acyl group(s), may be comprised in the keto triglyceride.

When the keto triglyceride only comprises one or two keto C18 acyl group(s), wherein the oxygen of the keto is positioned at the ninth or tenth carbon atom of the keto acyl group(s), the other acyl group(s) preferably comprise(s) 16 to 24 carbon atoms. More preferably such other acyl group(s) is/are linear, saturated or unsaturated.

Advantageously, in a keto triglyceride, at least two acyl groups of the keto triglyceride are C18 acyl groups wherein for each acyl group:
- the oxygen of the keto is positioned at the ninth carbon atom of the keto acyl group, or
- the oxygen of the keto is positioned at the tenth carbon atom of a keto acyl group, and optionally one acyl group of the keto triglyceride is unsaturated.

Alternatively, in the keto triglyceride, the acyl groups are a mixture of saturated keto C18 acyl group(s) and/or unsaturated keto C18 acyl group(s), and optionally unsaturated acyl group(s), wherein the oxygen of the keto is positioned at the ninth or tenth carbon atom of the keto acyl group(s).

Keto C18 fatty acids and keto C18 fatty acid esters as described in the invention can be prepared by any known methods to any person skilled in the art. Examples of preparation of keto triglycerides and keto fatty acids are described in the publication "Ketofettsäure-Derivate - Ein einfaches Verfahren zu ihrer Herstellung"; Stoll et al; Fat Sci. Technol.; 9 (1992); 332-337; and in the patent US 5,245,062. US-A-2744832 discloses a wrinkle drying fatty oil siccative comprising keto C18 fatty acids.

Advantageously, keto triglycerides are first prepared from a mixture of triglycerides comprising C18 acyl groups having carbon-carbon double bond(s) (such as a renewable oil), whose triglyceride carbon-carbon double bonds are first epoxidized by any known methods.

Renewable oils suitable for preparing keto triglycerides are essentially composed of triglycerides (more than 95 wt% of triglycerides). A preferred renewable oil comprises at least 35 wt% of C18 acyl groups comprising at least a carbon-carbon double bond between C9 and C10, preferably at least 50 wt%, more preferably at least 60 wt% on the total weight of acyl groups.

Advantageously, the renewable oil may be chosen from the group constituted by high oleic sunflower oil, sunflower oil, rapeseed oil, high oleic safflower oil, safflower oil, soybean oil, lunaria oil and tall oil.

Examples of epoxidation reactions are described in patent US 2,485,160.

The epoxides (or oxirane groups) are then rearranged into carbonyl groups to form keto triglycerides. Examples of such rearrangements are described in the publication mentioned above and in patent US 5,245,062.

Carbon-carbon double bonds can be totally or partially epoxidized, leading therefore to saturated or unsaturated keto triglycerides comprising keto acyl group(s) wherein the oxygen of the keto is positioned at the ninth or tenth carbon atom of each keto acyl group.

Keto C18 fatty acids, wherein the oxygen of the keto is positioned at the ninth or tenth carbon atom of a keto acyl group of each keto fatty acid, are advantageously obtained from the above mentioned keto triglycerides by saponification and acidification.

Keto C18 fatty acid esters, wherein the oxygen of the keto is positioned at the ninth or tenth carbon atom of the keto acyl group of each keto fatty acid ester (other than keto triglycerides), can be obtained by transesterification between the above mentioned keto triglycerides and an alcohol, by esterification between the keto C18 fatty acids described in the invention and an alcohol, or by ketonisation of unsaturated C18 fatty acid esters comprising a sp² carbon at C9 and/or C10, according to any method described in the state of art.

A drying promoter is a compound that accelerates the drying of an alkyd resin.

Keto C18 fatty acid(s) and/or keto C18 fatty acid ester(s) as described in the invention are particularly efficient drying promoter(s) when combined with a drier, in particular a metal based drier.

The present invention also concerns a product comprising keto C18 fatty acid(s) and/or keto C18 fatty acid ester(s), wherein the oxygen of the keto is positioned at the ninth or tenth carbon atom of a keto C18 acyl group of each keto C18 fatty acid or keto C18 fatty acid ester, and a drier, as a combined preparation for simultaneous or separate use.

The product according to the invention is a juxtaposition of separate but functionally interacting individual components: keto C18 fatty acid(s) and/or keto C18 fatty acid ester(s) as described in the invention and a drier ("kit-of-parts").

Advantageously, the product of the invention is used to dry an alkyd resin, in a short period of time, such as less than 20 hours.

Keto C18 fatty acid(s) and keto C18 fatty acid ester(s), are as described above, including preferential and advantageous features.

The drier is preferably chosen from the driers used in the field of coatings, more particularly driers suitable with alkyd resins. The person skilled in the art knows how to choose the drier(s) adapted to the intended application.

Preferably, the drier is a mixture of driers.

Advantageously, the drier is a metal based drier, in particular a mixture of metal based driers.

Examples of suitable driers are metal salts (such as cobalt, manganese, iron, zirconium, strontium, aluminium, calcium, barium, bismuth, zinc, lithium and potassium) of aliphatic natural or synthetic acids (such as linoleic acid, naphtenic acid, 2-ethyl-hexanoic acid and neodecanoic acid).

Preferably, the metal of the metal salt is chosen from the group constituted by cobalt, manganese, iron, zirconium, calcium, potassium, aluminium or a mixture thereof.

In the product of the invention, the weight ratio (total quantity of keto C18 fatty acid(s) and/or keto C18 fatty acid ester(s)) / (total quantity of drier(s)) is comprised between 0.01 and 99.

By "total quantity of keto C18 fatty acid(s) and/or keto C18 fatty acid ester(s)", it is intended the weight of all molecules of keto C18 fatty acid(s) and keto C18 fatty acid ester(s), wherein the oxygen of the keto is positioned at the ninth or tenth carbon atom of a keto acyl group of each keto C18 fatty acid or keto C18 fatty acid ester.

By "total quantity of drier(s)" it is intended the weight of all molecules of drier(s) (excluding the drying promoter).

In the product of the invention, the total quantity of keto C18 fatty acid(s) and/or keto C18 fatty acid ester(s), is preferably comprised between 1 and 99% by weight based on weight of the product.

In the product of the invention, the total quantity of drier(s) is preferably comprised between 1 and 99% by weight based on the weight of the product.

Preferably, in the product of the invention, the metal content is comprised between 0.1 and 30% by weight based on the weight of the product.

Depending on the drier, in particular on the metal based drier, saturated or unsaturated keto C18 fatty acid(s) and/or saturated or unsaturated keto C18 fatty acid ester(s) as described in the invention might be preferred.

If the drier is an iron based drier, then preferably unsaturated keto C18 fatty acid(s) and/or unsaturated keto C18 fatty acid ester(s), wherein the oxygen of the keto is positioned at the ninth or tenth carbon atom of a keto acyl group of each keto C18 fatty acid or keto C18 fatty acid ester, is/are used.

If the drier is a cobalt based drier, then preferably saturated keto C18 fatty acid(s) and/or saturated keto C18 fatty acid ester(s), wherein the oxygen of the keto is positioned at the ninth or tenth carbon atom of a keto acyl group of each keto C18 fatty acid or keto C18 fatty acid ester, is/are used.

In one embodiment, components of the product of the invention are used simultaneously, for example in the form of an additive package. Keto C18 fatty acid(s) and/or keto C18 fatty acid ester(s) as described in the invention, and the drier are first blended together to form an additive package.

The additive package comprises or consists of:
- keto C18 fatty acid(s) and/or keto C18 fatty acid ester(s), wherein the oxygen of the keto is positioned at the ninth or tenth carbon atom of a keto acyl group of each keto C18 fatty acid or keto C18 fatty acid ester, and
- a drier.

The additive package is then mixed with an alkyd resin.

Alternatively, in another embodiment, components of the product of the invention are used separately. Keto C18 fatty acid(s) and/or keto C18 fatty acid ester(s) as described in the invention, and drier(s) are individually and/or successively mixed with an alkyd resin.

The present invention relates also a composition keto C18 fatty acid(s) and/or keto C18 fatty acid ester(s), wherein the oxygen of the keto is positioned at the ninth or tenth carbon atom of a keto C18 acyl group of each keto C18 fatty acid or keto C18 fatty acid ester, a drier, a solvent and an alkyd resin.

Keto C18 fatty acid(s), keto C18 fatty acid ester(s) and the drier are as described above, including preferential and advantageous features.

The total quantity of drier(s) is preferably of at least 0.5 wt%, more preferably of at least 1 wt% based on the weight of the composition.

The total quantity of keto C18 fatty acid(s) and/or keto C18 fatty acid ester(s) is preferably of at least 0.10 wt%, more preferably of at least 0.15 wt% based on the weight of the composition.

More particularly, the total quantity of keto C18 acyl group(s), wherein the oxygen of the keto is positioned at the ninth or tenth carbon atom of the keto C18 acyl group(s), is preferably of at least 0.10 wt%, more preferably of at least 0.15 wt% based on the weight of the composition.

By "total quantity of keto C18 acyl group(s), wherein the oxygen of the keto is positioned at the ninth or tenth carbon atom of the keto C18 acyl group(s)", it is intended the weight of all keto C18 acyl group(s) contained in keto C18 fatty acid(s) and keto C18 fatty acid ester(s) present in the composition, wherein the oxygen of the keto is positioned at the ninth or tenth carbon atom of the keto acyl group(s).

Preferably, the total quantity keto C18 fatty acid(s) and/or keto C18 fatty acid ester(s), is of at most 4 wt%, more preferably of at most 3 wt% based on the weight of the composition.

The solvent may be water or an organic solvent.

In case of the solvent is water, the composition may further comprise a suitable emulsifier. The composition may then be in the form of an emulsion.

Preferably the solvent is an organic solvent.

Mixture of organic solvents may also be used.

Suitable organic solvents include aliphatic, cycloaliphatic and aromatic hydrocarbons, alcohol ethers, alcohol ether esters, alcohol esters and mixtures thereof.

Preferably, the solvent is chosen from the group constituted by white spirit, dearomatized white spirit, higher flash point white spirit, isoparafins, ethyl acetate, butyl acetate, butyl glycol, butyl diglycol, propylene glycol mono methyl ether and dipropylene glycol mono methyl ether and mixtures thereof.

The total quantity of solvent(s) is typically comprised between 5 and 85% by weight, preferably between 10 and 75% by weight, based on the weight of the composition.

The alkyd resin is preferably obtainable by polycondensation reactions between:
- a polyol;
- a polycarboxylic acid or a cyclic carboxylic anhydride; and
- an unsaturated fatty acid or an unsaturated triglyceride.

The total quantity of alkyd resin(s) in the composition of the invention is preferably comprised between 15 and 90% by weight, more preferably between 25 and 80% by weight, based on the weight of the composition.

A preferred composition according to the invention comprises:
- 15-90 wt%, preferably 25-85 wt% of an alkyd resin;
- 9.4-84.4 wt%, preferably 13.85-73.85 wt% of solvent(s);
- at least 0.5 wt%, preferably at least 1 wt%, of drier(s); and
- at least 0.1 wt%, preferably at least 0.15 wt%, of keto C18 fatty acid(s) and/or keto C18 fatty acid ester(s), wherein the oxygen of the keto is positioned at the ninth or tenth carbon atom of a keto acyl group of each keto C18 fatty acid or keto C18 fatty acid ester,
wt% being based on the weight of the composition.

The composition according to the invention can further comprise an anti-skinning agent and/or a pigment.

An anti-skinning agent is used to suppress the catalytic activity of metal driers and to preclude untimely oxidation. Examples of suitable anti-skinning agents are methyl ethyl ketoxime, n-butyl ketoxime, cyclohexane ketoxime, diethylhydroxylamine, 2-[(1-methylpropyl)amino]ethanol or phenolic anti-skinning agents such as 2-cyclohexylphenol, 4-cyclohexylphenol, 4-tert-amylphenol.

A pigment or a colorant can be selected from the inorganic or organic compounds. Examples are titanium dioxide, iron oxides, carbon black, mixed metal oxides, mono- azo and di-azo pigments, copper phthalocyanines and anthraquinones.

The composition according to the invention can further comprise one or more additive(s), such as fillers, extenders, wetting agents, anti-sagging agents, anti-oxidants, bactericides, fungicides, insecticides, foam suppressing agents, slip agents, flow promoters, levelling agents, UV-absorbers, HALS-radical scavengers, corrosion inhibitors, matting agents, waxes, flame retardants, loss of dry inhibitors, optical brighteners, dispersing agents, adhesion promoters and air release agents.

The present invention also concerns a process for preparing a composition according to the invention, by mixing:
- the keto C18 fatty acid(s) and/or keto C18 fatty acid ester(s), wherein the oxygen of the keto is positioned at the ninth or tenth carbon atom of a keto C18 acyl group of each keto C18 fatty acid or keto C18 fatty acid ester;
- the drier;
- the solvent;
- the alkyd resin; and
- optionally the anti-skinning agent and/or the pigment.

Advantageously, the composition is prepared according to the proportions described above.

In one embodiment, keto C18 fatty acid(s) and/or keto C18 fatty acid ester(s) mentioned above is/are first mixed with the solvent and/or the alkyd resin.

Preferably, the keto C18 fatty acid(s) is/are first mixed with the solvent.

The mixing of the keto C18 fatty acid(s) and/or keto C18 fatty acid ester(s) with the solvent and the alkyd resin, is preferably performed at a temperature comprised between 30 and 80 °C, more preferably between 50 and 70 °C.

In another embodiment, the keto C18 fatty acid(s) and/or keto C18 fatty acid ester(s) is/are first mixed with the drier. The additive package thus formed, is then mixed with the solvent, the alkyd resin and optionally with the anti-skinning agent and/or the pigment.

The present invention also relates to the use of the composition according to the invention as a coating composition.

The coating composition can be used for coating wood, plastics, leather, textiles, glass, ceramic or metals. They may be applied by any of the known methods, such as spraying, brushing, flooding, casting, dipping and rolling.

Advantageously, the coating composition is a paint, a varnish, a primer or a lacquer.

As illustrated in Example 5, coating composition of the invention have shorter drying time, thanks to the presence of keto C18 fatty acids or keto C18 fatty acid esters.

The properties, other than drying time, of coating compositions of the invention are not affected by the presence of keto C18 fatty acid(s) and/or keto C18 fatty acid ester(s).

Except for the drying time, coating compositions of the invention have the same properties of coating compositions comprising neither keto C18 fatty acid nor keto C18 fatty acid ester.

In particular, hardness of coating compositions according to invention is similar to hardness of coating compositions comprising neither keto C18 fatty acid nor keto C18 fatty acid ester.

Similarly, yellowing behavior of coating compositions of the invention is the same as coating compositions comprising neither keto C18 fatty acid nor keto C18 fatty acid ester.

The present invention also relates to a method for reducing the drying time of a composition comprising an alkyd resin and a drier, by adding keto C18 fatty acid(s) and/or keto C18 fatty ester(s), wherein the oxygen of the keto is positioned at the ninth or tenth carbon atom of a keto C18 acyl group of each keto C18 fatty acid or keto C18 fatty ester, to the composition.

The present invention also concerns a method for reducing the drying time of a composition comprising an alkyd resin, by adding a product according to the invention, in particular an additive package of the invention, to the composition.

The additive package, the keto C18 fatty acid(s), the keto C18 fatty acid ester(s), the drier and the alkyd resin, are as described above, including preferential and advantageous features and embodiments.

Notably, in methods according to the invention, the total quantity of keto C18 acyl group(s), wherein the oxygen of the keto is positioned at the ninth or tenth carbon atom of the keto C18 acyl group(s), is of at least 0.10%, more preferably at least 0.15% by weight based on the weight of the composition.

Preferably, the total quantity of keto C18 acyl group(s), wherein the oxygen of the keto is positioned at the ninth or tenth carbon atom of the keto C18 acyl group(s), is of at most 4%, more preferably of at most 3% by weight based on the weight of the composition.

The compositions may further comprise a solvent, an anti-skinning agent, a pigment and/or additive(s) as described above.

The keto C18 fatty acid(s) and/or keto C18 fatty acid ester(s), or the additive package, may be introduced at any step of the preparation of the composition, such as during the formulation or in a ready to use composition. The presence of keto C18 fatty acid(s) and/or keto C18 fatty acid ester(s), or of the additive package, accelerate the drying time of the composition after application on a surface.

Advantageously, in methods of the invention, the composition is a coating composition.

Advantageously, in all uses, products, compositions and methods according to the invention, keto C18 fatty acid(s) or keto C18 fatty acid ester(s), wherein the oxygen of the keto is positioned at the ninth or tenth carbon atom of a keto C18 acyl group of each keto C18 fatty acid or keto C18 fatty acid ester, is/are used.

More advantageously, keto triglycerides as described in the invention are used.

The invention is further described in the following examples. It will be appreciated that the invention as claimed is not intended to be limited in any way by these examples.

### Example 1: Preparation of keto C18 fatty acids and keto C18 fatty acid esters

### 1.1 Preparation of keto triglycerides

### 1.1.1 Preparation of keto triglycerides 1 (keto TG 1)

### Epoxidation

In a reactor equipped with reflux condenser, thermometer and mechanical stirrer, 1000 g of an high oleic sunflower oil (CAS: 8001-21-6) were mixed with 93 g of formic acid (from Merck) and heated to 45 °C. Subsequently, 374 g of hydrogen peroxide 50% (from Bernd Kraft) was added dropwise in order to control the exothermicity. The mixture was then allowed to cool down to room temperature. It was then washed with water in order to remove the formic acid and excess hydrogen peroxide, and dried.

Analysis by GC-FID confirmed formation of epoxidized triglycerides with total conversion of carbon-carbon double bonds into epoxides.

### Rearrangement of the oxirane groups into carbonyl groups

In a reactor equipped with reflux condenser, thermometer and mechanical stirrer, 350 g of epoxidized triglycerides prepared in step above and 1.85 g of Nal (CAS:7681-82-5) were mixed together and heated to 220 °C. After 275 min, the mixture was allowed to cool to room temperature.

It was then washed with water and dried.

Analysis by GC-FID confirmed formation of keto triglycerides.

More particularly 80 wt% of acyl groups comprised in the keto triglycerides 1, are stearyl groups bearing a carbonyl group on the ninth or tenth carbon atoms.

### 1.1.2 Preparation of keto triglycerides 2 (keto TG 2)

This mixture of keto triglycerides 2 was prepared following the method described in Example 1.1.1:
Partial epoxidation is conducted using 140 g of high oleic sunflower oil, 13 g of formic acid, 19 g of hydrogen peroxide 50%.

Analysis by GC-FID confirmed formation of epoxidized triglycerides with partial conversion of carbon-carbon double bonds into epoxides.

Rearrangement of the oxirane groups into carbonyl groups was conducted from 140 g of partially epoxidized triglycerides obtained previously and 0.45 g of Nal for 180 min at 220 °C.

Analysis by GC-FID confirmed formation of keto triglycerides.

More particularly, among all acyl groups comprised in the keto triglycerides, 35 wt% are keto stearyl groups, more specifically stearyl groups bearing a carbonyl group on their ninth or tenth carbon atoms.

### 1.2 Preparation of keto C18 fatty acids (keto FA)

### Saponification and acidification of the keto triglycerides 1

224 g of keto TG 1 prepared in Example 1.1 were treated with 350 g of water and 36 g of NaOH pellets (technical grade) at 90 °C for 2 hours. The resulting keto C18 fatty acid soaps were acidified with 48 g of sulphuric acid (CAS: 7664-93-9) at 90 °C during 30 minutes. The resulting keto C18 fatty acids were washed with water in order to remove the Na₂SO₄ salt and dried.

### Purification of keto C18 fatty acids

The dried keto C18 fatty acids obtained in previous step were distilled.

Analysis by HPLC confirmed the complete hydrolysis of triglycerides.

Analysis by GC-FID of the purified keto C18 fatty acids showed that the composition of acyl groups comprised in keto C18 fatty acids was the same than in the keto triglycerides 1.

More particularly 80 wt% of acyl groups comprised in the keto C18 fatty acids thus obtained, are stearyl groups bearing a carbonyl group on the ninth or tenth carbon atoms.

### 1.3 Preparation of keto C18 fatty acid methyl esters (keto Me)

### Esterification of keto C18 fatty acids

30 g of the purified mixture of keto C18 fatty acids obtained above, were esterified using 12 mL of MeOH in the presence of 0.05 g of H₂SO₄ at 125°C using a flask that collect the condensed water and methanol. The reaction was stopped when an acid value (according to ISO 660:2009) below 5 was reached and the reaction mixture was neutralized with aqueous NaOH.

The remaining traces of water and methanol was removed in a drying setup at 80 °C under reduced pressure.

### Purification of keto C18 fatty acid methyl esters

The keto C18 fatty acid methyl esters were further purified trough vacuum distillation at 185-190 °C.

A mixture of keto C18 fatty acid methyl esters, in particular 9-keto methyl stearate and 10-keto methyl stearate, was obtained with a purity of 82 wt%.

### Example 2: Preparation of a product (additive package) according to the invention

Additive package 1 was prepared by mixing 53 wt% of keto triglycerides 1 prepared in Example 1.1.1, with 5 wt% of an iron based drier (Borchi Oxy-coat from Borchers), 21 wt% of a calcium based drier (Octa-Soligen Calcium 10 basic from Borchers) and 21 wt% of a zirconium based drier (Octa-Soligen Zr 12 from Borchers).

### Example 3: Preparation of alkyd resins

### 3.1 Reagents used

- unsaturated fatty acids:
   - sunflower oil fatty acids (sunflower FA), Nouracid HE45 from Oleon;
   - linseed oil fatty acids (linseed FA), Nouracid LE80 from Oleon;
   - soybean oil fatty acids (soybean FA), Nouracid SE45 from Oleon;
- phthalic anhydride from Merck;
- pentaerythritol from Azelis;
- xylene from Brenntag GmbH.

### 3.2 Method

477.6 g of unsaturated fatty acids, 172.2 g of phthalic anhydride and 150.4 g of pentaerythritol were mixed in a stirred batch reactor together with 25 g of xylene as a water entrainer. Under nitrogen flow, the mixture was stirred at 250 rpm and heated up to 235 °C, while water and xylene were evaporated, removed from reactor system and subsequently condensed, and xylene sent back to the reactor.

Polycondensation reactions were carried out until an acid value (according to ISO 660:2009) of 10 mg KOH/g or less was reached.

Finally, the xylene was removed from the product mixture by evaporation.

Type of unsaturated fatty acids used to prepare alkyd resins are summarized in Table 1.

**Table 1: Fatty acids contained in alkyd resins 1-3**

| | | Unsaturated fatty acids content (wt%) | | |
|---|---|---|---|---|
| | | C18:1 | C18:2 | C18:3 |
| Alkyd resin 1 | Sunflower FA | 18-33 | 60-74 | 0-1 |
| Alkyd resin 2 | Soybean FA | 22-33 | 55-65 | 0-10 |
| Alkyd resin 3 | Linseed FA | 17-25 | 13-19 | 45-56 |

To facilitate their handling, alkyd resins were diluted in a solvent. In particular, in this example, all alkyd resins were mixed in white spirit (White Spirit D40 from Brenntag GmbH), in a weight ratio alkyd resin: white spirit of 80:20, at 80 °C until homogeneous phases were obtained. In the following Examples, these diluted alkyd resins will be identified such as "alkyd resin (80%)".

### Example 4: Preparation of coating compositions

### 4.1 Products used

- alkyd resins 1-3 prepared in Example 3;
- keto C18 fatty acids (keto FA) prepared in Example 1.2;
- keto C18 fatty acid methyl esters (keto Me) prepared in Example 1.3;
- keto triglycerides 1 and 2 (keto TG1 and keto TG2) prepared in Example 1.1.1 and 1.1.2;
- additive package 1 prepared in Example 2;
- driers:
   - a combination of cobalt, calcium and zirconium based driers (Co, Ca, Zr), Octa-Soligen 155 from Borchers;
   - iron (Fe) based drier, Borchi Oxy-coat from Borchers;
   - calcium (Ca) based drier, Octa-Soligen Calcium 10 basic from Borchers;
   - zirconium (Zr) based drier, Octa-Soligen Zr 12 from Borchers;
- solvents:
   - white spirit, White spirit D 40 from Brenntag;
   - ethyl acetate (>99%) from Bernd Kraft;
- anti-skinning agents:
   - methyl ethyl ketoxime, CAS: 96-29-7;
   - Ascinin Anti Skin 0445 from Borchers;
   - Borchi Nox M2 from Borchers;

- pigments:
   - TiO₂ from Kronos;
   - Kronos 2300
- filler: talc.

### 4.2 Varnishes according to the invention

Varnish 1 was prepared by mixing 30 g of alkyd resin 1 with 0.6 g of keto FA diluted in 10 g of ethyl acetate at 70 °C. The composition was cooled down to room temperature and 0.6 g of a combination of Co, Ca, Zr driers and 0.03 g of methyl ethyl ketoxime were added.

Varnishes 2-5 were prepared by diluting 37.5 g of an alkyd resin (80%) in 5.4 g of white spirit and then by mixing with keto C18 fatty acid esters, 0.6 g of a combination of Co, Ca, Zr driers and 0.03 g of methyl ethyl ketoxime.

Varnishes 6 and 7 were prepared by diluting 37.5 g of an alkyd resin (80%) in 5.4 g of white spirit and then by mixing with keto triglycerides 1, 0.06 g of Fe based drier, 0.24 g of Ca based drier and 0.24 g of Zr based drier, and 0.06 g of Ascinin Anti Skin 0445.

Varnish 8 was prepared by diluting 37.5 g of alkyd resin 3 (80%) in 5.4 g of white spirit and then by mixing with 1.14 g of additive package 1 and 0.06 g of Ascinin Anti Skin 0445.

Each composition was stirred until a homogeneous phase was obtained.

The varnishes obtained were conditioned for at least 16 hours at 23 °C and 50% relative humidity before application.

Type and content of alkyd resin and keto compounds are detailed in Table 2 below.

### 4.3 Comparative varnishes

Preparation of comparative varnishes 1-4 were conducted according to similar methods described in Example 4.1.

Comparative varnish 1 was prepared as varnish 1 without adding keto C18 fatty acids.

Comparative varnishes 2-3 were prepared as varnishes 2-5 without adding any keto compounds.

Comparative varnish 4 was prepared as varnishes 6 and 7 without adding any keto compounds.

Each comparative composition was stirred until a homogeneous phase was obtained.

The comparative varnishes obtained were conditioned for at least 16 hours at 23 °C and 50% relative humidity before application.

**Table 2: Type of alkyd resin, keto compounds and driers of varnishes 1-8 according to the invention and of comparative varnishes 1-4**

| | Alkyd resin | keto C18 fatty acids/esters | Driers | keto C18 acyl group content (wt%*) |
|---|---|---|---|---|
| Varnish 1 | 1 | 1.46 wt%* keto FA | 1.46 wt%* Co, Ca, Zr | 1.16 |
| Comparative varnish 1 | 1 | - | 1.48 wt%* Co, Ca, Zr | - |
| Varnish 2 | 2 | 0.14 wt%* keto Me | 1.38 wt%* Co, Ca, Zr | 0.11 |
| Varnish 3 | 2 | 1.36 wt%* keto Me | 1.36 wt%* Co, Ca, Zr | 1.11 |
| Comparative varnish 2 | 2 | - | 1.38 wt%* Co, Ca, Zr | - |
| Varnish 4 | 3 | 0.34 wt%* keto TG 1 | 1.37 wt%* Co, Ca, Zr | 0.27 |
| Varnish 5 | 3 | 0.68 wt%* keto TG 1 | 1.37 wt%* Co, Ca, Zr | 0.55 |
| Comparative varnish 3 | 3 | - | 1.38 wt%* Co, Ca, Zr | - |
| Varnish 6 | 3 | 0.68 wt%* keto TG 1 | 1.23 wt%* Fe, Ca, Zr | 0.55 |
| Varnish 7 | 3 | 1.36 wt%* keto TG 1 | 1.22 wt%* Fe, Ca, Zr | 1.09 |
| Varnish 8 | 3 | 2.59 wt%* additive package 1 (1.36 wt%* keto TG 1 and 1.22 wt%* driers) | | 1.09 |
| Comparative varnish 4 | 3 | - | 1.24 wt%* Fe, Ca, Zr | - |

| | | | | |
|---|---|---|---|---|
| *wt% are based on weight of the varnish | | | | |

### 4.4 Paints according to the invention

Paint 1, a gloss paint, was formulated by preparing a mixture A and a mixture B based on the raw materials as described in Table 3 below. Mixture A was obtained by stirring raw materials A at 10 000 rpm at 40 °C for 30 min. Mixture B was obtained by stirring raw materials B manually at room temperature for 2 min.

Subsequently, mixture B was added in mixture A and the resulting mixture was agitated at 2000 rpm at 40 °C for 10 min.

Then it was filtered through a nylon paint filter (260 µ) to obtain a paint that was stored under constant conditions (23±1 °C and 50±5% relative humidity) for 16 h before application.

**Table 3: Formulation of paint 1 according to the invention**

| | Raw Materials | Function(s) | Amount (g) |
|---|---|---|---|
| A | Alkyd resin 2 (80%) | binder | 30 |
| | White spirit | solvent | 2 |
| | Keto triglycerides 1 | drying promoter | 0.8 |
| | TiO₂ | white pigment | 26 |
| B | Alkyd resin 2 (80%) | binder | 20 |
| | White spirit | solvent | 7,8 |
| | Octa-Soligen 155 | driers (Co, Ca, Zr) | 1 |
| | Borchi Nox M2 | anti-skinning agent | 0,3 |

Keto C18 acyl groups content in paint is of 0.73 wt% based on weight of the paint.

Paints 2-4, semi-gloss paints, were prepared as described above and according to formulations described in Table 4 below.

**Table 4: Formulation of paints 2-4 according to the invention**

| | Raw Materials | Function(s) | Paint 2 (g) | Paint 3 (g) | Paint 4 (g) |
|---|---|---|---|---|---|
| A | Alkyd resin 2 (80%) | binder | 26.1 | 26.1 | 26.1 |
| | Keto C18 fatty acid methyl esters | drying promoter | 0.7 | - | - |
| | Keto triglycerides 2 | drying promoter | - | 0.7 | - |
| | Keto triglycerides 1 | drying promoter | - | - | 0.7 |
| | Octa soligen Calcium 10 | drier (Ca) | 0.5 | 0.5 | 0.5 |
| | Kronos 2300 | pigment | 15 | 15 | 15 |
| | Talc Luzenac | filler | 20 | 20 | 20 |
| B | Alkyd resin 2 (80%) | binder | 17.5 | 17.5 | 17.5 |
| | White spirit | solvent | 10.1 | 10.1 | 10.1 |
| | Borchi Oxy-coat 1310 | drier (Fe) | 1 | 1 | 1 |
| | Ascinin Anti Skin 0445 | anti-skinning | 0.3 | 0.3 | 0.3 |

Keto C18 acyl groups contents in paints 2-4 are respectively of 0.63, 0.27 and 0.62 wt% based on weight of each paint.

### 4.5 Comparative paints

Comparative paint 1 was formulated according to method and amounts of Table 3 described in Example 4.3 without keto triglycerides.

Comparative paint 2 was formulated according to method and amounts of Table 4 described in Example 4.3 without any keto C18 fatty acid esters.

### Example 5: Evaluation of the drying time of the coating compositions prepared in Example 4

The drying time was measured according to standard ASTM D 5895-13. The coating composition is applied on a glass plate (300x25mm) with a thickness of 76 µm with an application speed of 50 mm/s, at 23 °C and 50 +/- 5% relative humidity.

Results obtained are gathered in Table 5 below.

**Table 5: Drying time of varnishes and paints according to the invention and of comparative varnishes and paints**

| | Drying time (hours) | Drying time reduction rate |
|---|---|---|
| Varnish 1 | 14.25 | -38% |
| Comparative varnish 1 | 23 | |
| Varnish 2 | 13.75 | -9.8% |
| Varnish 3 | 8 | -47.5% |
| Comparative varnish 2 | 15.25 | |
| Varnish 4 | 15.25 | -31.5% |
| Varnish 5 | 12.75 | -42.7% |
| Comparative varnish 3 | 22.25 | |
| Varnish 6 | 12 | -7.7% |
| Varnish 7 | 9.75 | -25% |
| Varnish 8 | 9.75 | -25% |
| Comparative varnish 4 | 13 | |
| Paint 1 | 8.5 | -58% |
| Comparative paint 1 | 20.25 | |
| Paint 2 | 9 | -42.8% |
| Paint 3 | 9.5 | -39.7% |
| Paint 4 | 9.5 | -39.7% |
| Comparative paint 2 | 15.75 | |

Results show that varnishes and paints according to the invention have a shorter drying time than comparative varnishes and comparative paints prepared without any keto C18 fatty acid/ester.

This reduction in drying time is observed with both:
- coating composition (varnish 1) comprising keto C18 fatty acids compared to coating composition not comprising them (comparative varnish 1), and
- coating compositions comprising keto C18 fatty acid esters (varnishes 2 and 3 and paint 2 comprising keto C18 fatty acid methyl esters, and varnishes 4-7 and paints 1, 3-4 comprising keto triglycerides) compared to coating compositions not comprising any keto compounds (comparative varnishes 2-4 and comparative paints 1 and 2).

This evidences that presence of keto C18 fatty acids/esters contained in a varnish or a paint comprising an alkyd resin, reduces the drying time of these coating compositions.

By comparing drying times of paint 2 and paint 4, it can be observed that the reduction rate of the drying time for both paints is the same. Therefore, it can be concluded that keto C18 fatty acid methyl esters and keto triglycerides have the same effect on drying time of coating compositions.

This reduction in drying time is observed whatever the metal drier used. Indeed, keto C18 fatty acids/esters promote the drying of coating compositions comprising cobalt based drier (varnishes 1-5 and paint 1), or iron based drier (varnishes 6-7 and paints 2-4).

## Claims

1. Use of keto C18 fatty acid(s) and/or keto C18 fatty acid ester(s), wherein the oxygen of the keto is positioned at the ninth or tenth carbon atom of a keto C18 acyl group of each keto C18 fatty acid or keto C18 fatty acid ester and wherein the carbon of the oxycarbonyl group of the acyl group is C1, as a drying promoter which accelerates the drying of an alkyd resin.

2. Product comprising keto C18 fatty acid(s) and/or keto C18 fatty acid ester(s), wherein the oxygen of the keto is positioned at the ninth or tenth carbon atom of a keto C18 acyl group of each keto C18 fatty acid or keto C18 fatty acid ester and wherein the carbon of the oxycarbonyl group of the acyl group is C1, and a drier, as a combined preparation for simultaneous or separate use.

3. Composition comprising keto C18 fatty acid(s) and/or keto C18 fatty acid ester(s), wherein the oxygen of the keto is positioned at the ninth or tenth carbon atom of a keto C18 acyl group of each keto C18 fatty acid or keto C18 fatty acid ester and wherein the carbon of the oxycarbonyl group of the acyl group is C1, a drier, a solvent and an alkyd resin.

4. Composition according to claim 3, wherein the total quantity of keto C18 acyl group(s), wherein the oxygen of the keto is positioned at the ninth or tenth carbon atom of the keto C18 acyl group(s), is of at least 0.10% by weight based on the weight of the composition.

5. Composition according to claim 3 or 4, further comprising an anti-skinning agent and/or a pigment.

6. Process for preparing the composition according to any of claims 3 to 5, by mixing:
- the keto C18 fatty acid(s) and/or keto C18 fatty acid ester(s), wherein the oxygen of the keto is positioned at the ninth or tenth carbon atom of a keto C18 acyl group of each keto C18 fatty acid or keto C18 fatty acid ester and wherein the carbon of the oxycarbonyl group of the acyl group is C1,
- the drier,
- the solvent,
- the alkyd resin, and
- optionally the anti-skinning agent and/or the pigment.

7. Use of the composition according to any of claims 3 to 5, as a coating composition.

8. Method for reducing the drying time of a composition comprising an alkyd resin and a drier, by adding keto C18 fatty acid(s) and/or keto C18 fatty acid ester(s), wherein the oxygen of the keto is positioned at the ninth or tenth carbon atom of a keto C18 acyl group of each keto C18 fatty acid or keto C18 fatty acid ester and wherein the carbon of the oxycarbonyl group of the acyl group is C1, to the composition.

9. Method for reducing the drying time of a composition comprising an alkyd resin, by adding a product according to claim 2, to the composition.

10. Method according to claim 8 or 9, wherein the total quantity of keto C18 acyl group(s), wherein the oxygen of the keto is positioned at the ninth or tenth carbon atom of the keto C18 acyl group(s), is of at least 0.10% by weight based on the weight of the composition.

## Patentansprüche

1. Verwendung von Keto-C18-Fettsäure(n) und/oder Keto-C18-Fettsäureester(n), wobei der Sauerstoff des Ketons am neunten oder zehnten Kohlenstoffatom einer Keto-C18-Acylgruppe jeder Keto-C18-Fettsäure oder jedes Keto-C18-Fettsäureesters positioniert ist und wobei der Kohlenstoff der Oxycarbonylgruppe der Acylgruppe C1 ist, als Trocknungsbeschleuniger, der die Trocknung eines Alkydharzes beschleunigt.

2. Produkt, das Keto-C18-Fettsäure(n) und/oder Keto-C18-Fettsäureester, wobei der Sauerstoff des Ketons am neunten oder zehnten Kohlenstoffatom einer Keto-C18-Acylgruppe jeder Keto-C18-Fettsäure oder jedes Keto-C18-Fettsäureesters positioniert ist und wobei der Kohlenstoff der Oxycarbonylgruppe der Acylgruppe C1 ist, und ein Trocknungsmittel umfasst, als Kombipräparat zur gleichzeitigen oder getrennten Verwendung.

3. Zusammensetzung, die Keto-C18-Fettsäure(n) und/oder Keto-C18-Fettsäureester, wobei der Sauerstoff des Ketons am neunten oder zehnten Kohlenstoffatom einer Keto-C18-Acylgruppe jeder Keto-C18-Fettsäure oder jedes Keto-C18-Fettsäureesters positioniert ist und wobei der Kohlenstoff der Oxycarbonylgruppe der Acylgruppe C1 ist, ein Trocknungsmittel, ein Lösungsmittel und ein Alkydharz umfasst.

4. Zusammensetzung nach Anspruch 3, wobei die Gesamtmenge an Keto-C18-Acylgruppe(n), wobei der Sauerstoff des Ketons am neunten oder zehnten Kohlenstoffatom der Keto-C18-Acylgruppe(n) positioniert ist, bezogen auf das Gewicht der Zusammensetzung mindestens 0,10 Gew.-% beträgt.

5. Zusammensetzung nach Anspruch 3 oder 4, die weiter ein Antihautbildungsmittel und/oder ein Pigment umfasst.

6. Prozess zum Herstellen der Zusammensetzung nach einem der Ansprüche 3 bis 5 durch Mischen:
- der Keto-C18-Fettsäure(n) und/oder Keto-C18-Fettsäureester, wobei der Sauerstoff des Ketons am neunten oder zehnten Kohlenstoffatom einer Keto-C18-Acylgruppe jeder Keto-C18-Fettsäure oder jedes Keto-C18-Fettsäureesters positioniert ist und wobei der Kohlenstoff der Oxycarbonylgruppe der Acylgruppe C1 ist,
- des Trocknungsmittels,
- des Lösungsmittels,
- des Alkydharzes, und
- gegebenenfalls des Antihautbildungsmittels und/oder des Pigments.

7. Verwendung der Zusammensetzung nach einem der Ansprüche 3 bis 5 als Beschichtungszusammensetzung.

8. Verfahren zum Reduzieren der Trocknungszeit einer Zusammensetzung, die ein Alkydharz und ein Trocknungsmittel umfasst, durch Zugeben von Keto-C18-Fettsäure(n) und/oder Keto-C18-Fettsäureester(n), wobei der Sauerstoff des Ketons am neunten oder zehnten Kohlenstoffatom einer Keto-C18-Acylgruppe jeder Keto-C18-Fettsäure oder jedes Keto-C18-Fettsäureesters positioniert ist und wobei der Kohlenstoff der Oxycarbonylgruppe der Acylgruppe C1 ist, zu der Zusammensetzung.

9. Verfahren zum Reduzieren der Trocknungszeit einer Zusammensetzung, die ein Alkydharz umfasst, durch Zugeben eines Produkts nach Anspruch 2 zu der Zusammensetzung.

10. Verfahren nach Anspruch 8 oder 9, wobei die Gesamtmenge an Keto-C18-Acylgruppe(n), wobei der Sauerstoff des Ketons am neunten oder zehnten Kohlenstoffatom der Keto-C18-Acylgruppe(n) positioniert ist, bezogen auf das Gewicht der Zusammensetzung mindestens 0,10 Gew.-% beträgt.

## Revendications

1. Utilisation de cétoacide(s) gras en C18 et/ou d'ester(s) de cétoacide gras en C18, dans le(s)quel(s) l'oxygène du céto est positionné sur le neuvième ou le dixième atome de carbone d'un groupe cétoacyle en C18 de chaque cétoacide gras en C18 ou ester de cétoacide gras en C18 et dans lequel le carbone du groupe oxycarbonyle du groupe acyle est en C1, comme promoteur de séchage qui accélère le séchage d'une résine alkyde.

2. Produit comprenant un ou plusieurs cétoacide(s) gras en C18 et/ou un ou plusieurs ester(s) de cétoacide gras en C18, dans le(s)quel(s) l'oxygène du céto est positionné sur le neuvième ou le dixième atome de carbone d'un groupe cétoacyle en C18 de chaque cétoacide gras en C18 ou ester de cétoacide gras en C18 et dans lequel le carbone du groupe oxycarbonyle du groupe acyle est en C1, et un siccatif, sous forme d'une préparation combinée pour une utilisation simultanée ou séparée.

3. Composition comprenant un ou plusieurs cétoacide(s) gras en C18 et/ou un ou plusieurs ester(s) de cétoacide gras en C18, dans le (s) quel (s) l'oxygène du céto est positionné sur le neuvième ou le dixième atome de carbone d'un groupe cétoacyle en C18 de chaque cétoacide gras en C18 ou ester de cétoacide gras en C18 et dans lequel le carbone du groupe oxycarbonyle du groupe acyle est en C1, un siccatif, un solvant et une résine alkyde.

4. Composition selon la revendication 3, dans laquelle la quantité totale de groupe(s) cétoacyle en C18, dans le(s)quel(s) l'oxygène du céto est positionné sur le neuvième ou le dixième atome de carbone des un ou plusieurs groupe(s) cétoacyle en C18, est d'au moins 0,10 % en poids sur la base du poids de la composition.

5. Composition selon la revendication 3 ou 4, comprenant en outre un agent antipeau et/ou un pigment.

6. Procédé de préparation de la composition selon l'une des revendications 3 à 5, en mélangeant :
- le ou les cétoacide (s) gras en C18 et/ou le ou les ester(s) de cétoacide gras en C18, dans le(s)quel(s) l'oxygène du céto est positionné sur le neuvième ou le dixième atome de carbone d'un groupe cétoacyle en C18 de chaque cétoacide gras en C18 ou ester de cétoacide gras en C18 et dans lequel le carbone du groupe oxycarbonyle du groupe acyle est en C1,
- le siccatif,
- le solvant,
- la résine alkyde, et
- facultativement l'agent antipeau et/ou le pigment.

7. Utilisation de la composition selon l'une quelconque des revendications 3 à 5, comme composition de revêtement.

8. Procédé de réduction de la durée de séchage d'une composition comprenant une résine alkyde et un siccatif, en ajoutant un ou plusieurs cétoacide(s) gras en C18 et/ou un ou plusieurs ester(s) de cétoacide gras en C18, dans le(s)quel(s) l'oxygène du céto est positionné sur le neuvième ou le dixième atome de carbone d'un groupe cétoacyle en C18 de chaque cétoacide gras en C18 ou ester de cétoacide gras en C18 et dans lequel le carbone du groupe oxycarbonyle du groupe acyle est en C1, à la composition.

9. Procédé de réduction de la durée de séchage d'une composition comprenant une résine alkyde, en ajoutant un produit selon la revendication 2, à la composition.

10. Procédé selon la revendication 8 ou 9, dans lequel la quantité totale de groupe(s) cétoacyle en C18, dans le(s)quel(s) l'oxygène du céto est positionné sur le neuvième ou le dixième atome de carbone des un ou plusieurs groupe(s) cétoacyle en C18, est d'au moins 0,10 % en poids sur la base du poids de la composition.
